# EUROPÄISCHE PATENTSCHRIFT

(11) **EP 1 249 700 B1**
(45) Veröffentlichungstag und Bekanntmachung des Hinweises auf die Patenterteilung: **03.06.2009**
(21) Anmeldenummer: 02005964.8
(22) Anmeldetag: 15.03.2002
(51) Int. Cl.: G01N 27/414

(54) **Sensor zum Messen einer Ionenkonzentration oder Gaskonzentration**
Sensor for measuring an ionic concentration or a gaseous concentration
Capteur pour mesurer une concentration ionique ou une concentration gazeuse

(30) Priorität: 12.04.2001 DE 10118366
(43) Veröffentlichungstag der Anmeldung: 16.10.2002
(73) Patentinhaber: Micronas GmbH, 79108 Freiburg i. Br. (DE)
(72) Erfinder: Frerichs, Heinz-Peter, Dr., 79271 St. Peter (DE)
(74) Vertreter: Patentanwälte Westphal, Mussgnug & Partner

(56) Entgegenhaltungen:
- DE-A- 3 144 459
- DE-A- 4 333 875
- DE-A- 19 849 932
- US-A- 4 385 274
- GERGINTSCHEW Z ET AL: "The capacitively controlled field effect transistor (CCFET) as a new low power gas sensor" SENSORS AND ACTUATORS B, ELSEVIER SEQUOIA S.A., LAUSANNE, CH, Bd. 36, Nr. 1, 1. Oktober 1996 (1996-10-01), Seiten 285-289, XP004061082 ISSN: 0925-4005

## Beschreibung

Die Erfindung bezieht sich auf einen Sensor zum Messen einer Ionenkonzentration oder Gaskonzentration.

Zur Messung von Ionenkonzentrationen werden unter anderem Sensoren mit Feldeffekttransistoren verwendet, die eine als Gate verwendete ionensensitive Schicht aufweisen, deren Potential abhängig ist von der Ionenkonzentration einer umgebenden Flüssigkeit oder eines umgebenden Gases. Die US 5,911,873 zeigt einen derartigen ionensensitiven FET (ISFET). Weiterhin sind zur Messung von Gaskonzentrationen z.B. aus der US 4,411,741 Sensoren mit Feldeffekttransistoren bekannt, die eine als Gate verwendete gassensitive Schicht aufweisen, deren Austrittsarbeit abhängig ist von einer umgebenden Gaskonzentration.

Derartige Sensoren werden im allgemeinen erzeugt, indem in einem Halbleitersubstrat durch Gegendotierung jeweils eine Drain und eine Source erzeugt werden und eine isolierende Schicht auf dem Substrat zwischen der Source und der Drain gewachsen oder deponiert wird. Eine ionensensitive Schicht kann direkt auf diese isolierende Schicht aufgebracht werden. Eine gassensitive Schicht kann in einem bestimmten Abstand angebracht werden, was als suspended Gate FET (SGFET) bezeichnet wird. Alternativ hierzu kann ein Gate auf dem Isolator aufgebracht werden, das kapazitiv durch ein in einem bestimmten Abstand angebrachtes gassensitives Gate gesteuert wird. Ein derartiger als capacitive controlled FET (CCFET) bezeichneter Sensor ist z.B. in der DE 43 33 875 C2 beschrieben.

Bei diesen Sensoren wird die durch die nachzuweisenden Ionen verursachte Ladungsänderung bzw. durch die nachzuweisenden Gasmoleküle verursachte Austrittsarbeitsänderung als Änderung der Gate-Source-Spannung und hierdurch bewirkte Änderung des Drain-Source-Stromes detektiert. Das SGFET und CC-FET haben den Vorteil, dass der aus Substrat, Drain, Source und isolierender Schicht gebildete Transducer von der sensitiven Schicht unabhängig ausgebildet werden kann.

Nachteilig bei diesen Sensoren ist insbesondere ihre Temperaturempfindlichkeit. So ist schon die Stromänderung, die durch eine Temperaturänderung um etwa 0,5 Kelvin verursacht wird, unter Umständen größer als die Signaländerung durch das zu detektierende Gas. Um diese Abhängigkeit von der Temperatur zu kompensieren, ist es bekannt, einen zweiten identischen FET zu bilden, der ein Gate erhält, welches nicht die gassensitive Schicht des ersten Gates aufweist und als Referenz-FET dient. Ein Nachteil hierbei ist, dass auf kleinem Raum zwei verschiedene Gates angebracht werden müssen. Ein weiterer Nachteil liegt darin, dass die zwei FETs relativ weit voneinander entfernt sein müssen und deshalb unterschiedliche Temperaturen aufweisen können. Bei zwei unterschiedlichen Gates ist im allgemeinen der Temperaturgang der Austrittsarbeiten der beiden Gates unterschiedlich, so dass keine gute Temperaturkompensation stattfinden kann.

Der Erfindung liegt die Aufgabe zugrunde, einen Sensor zum Messen einer Ionenkonzentration oder Gaskonzentration zu schaffen, der keine oder allenfalls eine geringe Temperaturabhängigkeit aufweist und vorteilhafterweise einen einfachen Aufbau, aufweist.

Diese Aufgabe wird durch einen Sensor nach Anspruch 1 gelöst. Die Unteransprüche beschreiben bevorzugte Ausführungsformen.

Der Erfindung liegt der Gedanke zugrunde, zwei sensitive Teilbereiche der sensitiven Schicht unterschiedlich kapazitiv an eine Vergleiehsschaltung anzukoppeln. Diese Vergleichsschaltung kann von der sensitiven Schicht räumlich getrennt ausgebildet werden. Sie ist aufgrund der räumlichen Trennung prozesstechnisch gut herstellbar und kann auf kleinem Raum und somit mit einer besseren thermischen Kopplung ihrer Komponenten ausgebildet werden als bekannte Messschaltungen. Die Vergleichsschaltung weist dabei zwei Feldeffekttransistoren auf, insbesondere MOSFETs, deren Gates mit den beiden leitfähigen Bereichen verbunden sind und deren Source gemeinsam ausgebildet ist. Die unterschiedliche Aussteuerung der Transistoren, ist hierbei ein Maß für die Potentialänderung an der sensitiven Schicht. Temperaturschwankungen bewirken hierbei gleiche Änderungen der Transistoreigenschaften und führen zu vernachlässigbaren Änderungen der Messwerte.

Erfindungsgemäß kann jeder leitfähige Bereich, der kapazitiv mit der sensitiven Schicht gekoppelt ist, mit dem Gate des betreffenden MOSFETs der Vergleichsschaltung als einheitliche, durchgängige leitfähige Schicht aufgetragen werden, sodass eine zusätzliche Kontaktierung entfällt. Der erfindungsgemäße Sensor kann somit prozesstechnisch einfach und mit relativ wenigen Prozessschritten auf einem Substrat hergestellt werden.

Die Erfindung wird im folgenden anhand der beiliegenden Zeichnungen an einigen Ausführungsformen näher erläutert. Es zeigen:
Fig. 1 eine Draufsicht auf einen Sensor gemäß einer Ausführungsform der Erfindung;
Fig. 2 einen Schnitt durch den Sensor von Figur 1 entlang der Linie A-A';
Fig. 3 ein elektrisches Ersatzschaltbild des Sensors von Figur 1, 2.
Fig. 4 einen Schnitt entsprechend Figur 2 durch einen Sensor gemäß einer weiteren Ausführungsform der Erfindung.

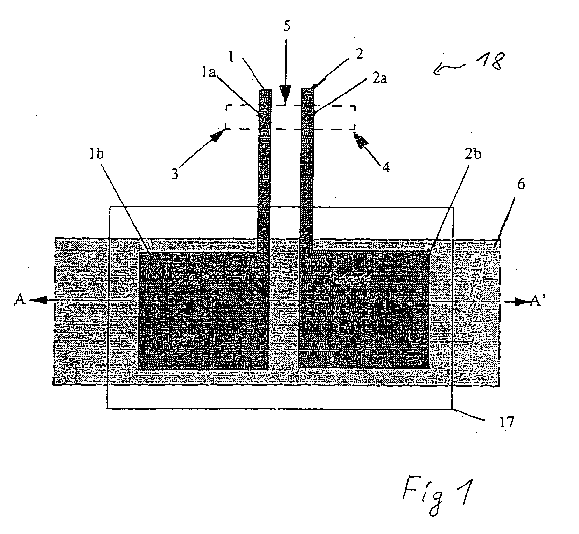

Gemäß Figur 1 ist in einem zweiten Abschnitt 18 eines Substrats 11, das hier als Silizium p-Substrat ausgebildet ist, durch Ionenimplantation eine erste n-dotierte Drain 3 und eine zweite n-dotierte Drain 4 sowie eine n-dotierte Source 5 ausgebildet. Zwischen den Drains 3, 4 und der Source 5 ist eine Dünnoxidschicht aufgebracht, die z.B. 8 bis 20 nm betragen kann und als Gatedielektrikum dient. Durch die beiden Drains 3, 4, der gemeinsamen Source 5 und die Dünnoxidschicht wird ein Transducer ausgebildet.

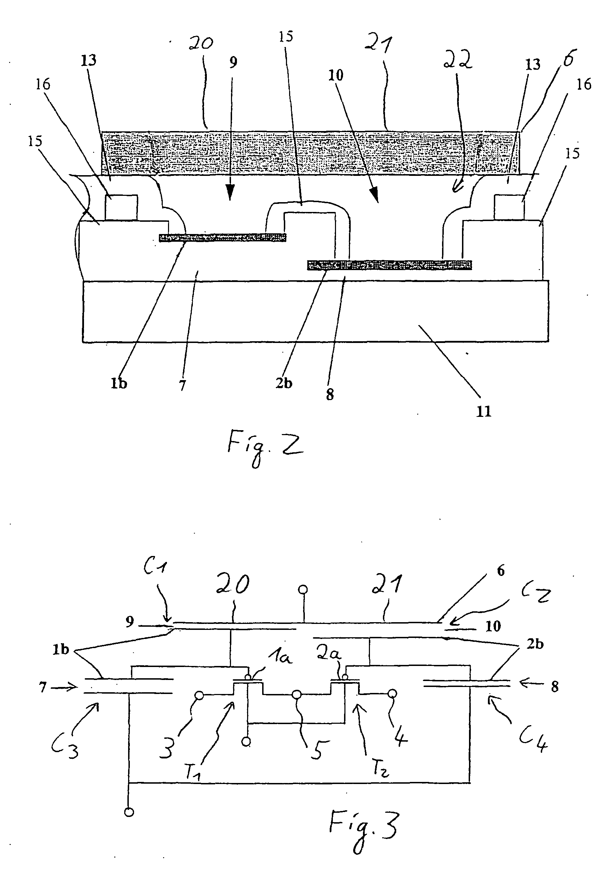

In einer Längsrichtung zu diesem Transducer versetzt ist in einem ersten Abschnitt 17 des Substrats 11 wie in Figur 2 gezeigt ein Dickoxidbereich mit einer ersten Dickoxidschicht 7 und einer in seitlicher Richtung hierzu versetzten dünneren zweiten Dickoxidschicht 8 ausgebildet. Auf der Dünnoxidschicht und den Dickoxidschichten 7 und 8 sind eine erste leitfähige Schicht 1 und eine zweite leitfähige Schicht 2 in seitlicher Richtung zueinander versetzt aufgetragen, die in diesen Ausführungsbeispielen jedoch nicht notwendigerweise symmetrisch, insbesondere spiegelsymmetrisch zueinander ausgebildet sind.

Die leitfähige Schicht 1 weist einen auf der ersten Dickoxidschicht 7 aufgetragenen ersten leitfähigen Bereich 1b und einen als erstes Gate 1a dienenden Bereich auf, der auf der Dünnoxidschicht zwischen der ersten Drain 3 und der Source 5 aufgetragen ist. Entsprechend weist die zweite leitfähige Schicht 2 einen auf der zweiten Dickoxidschicht 8 aufgetragenen zweiten leitfähigen Bereich 2b und einen als zweites Gate 2a dienenden Bereich auf, der auf der Dünnoxidschicht zwischen der zweiten Drain 4 und der Source 5 aufgetragen ist. Die leitfähigen Schichten 1, 2 können hierbei als Polylagen oder als Metallschichten aufgetragen werden. In dem zweiten Abschnitt 18 werden somit zwei MOSFETs T1, T2 ausgebildet.

Auf weiteren Zwischenlagen 13, 15 und 16 ist ein Gate 6 mit einer sensitiven Schicht aufgelegt, deren Austrittsarbeit abhängig ist von einer umgebenden Gaskonzentration. Hierbei ist unterhalb der sensitiven Schicht 6 ein Freiraum 22 ausgebildet, der einen dünneren Luftspalt 9 zwischen einem ersten sensitiven Teilbereich 20 der sensitiven Schicht 6 und dem ersten leitfähigen Bereich 1b und einen dickeren zweiten Luftspalt 10 zwischen einem zweiten sensitiven Teilbereich 21 der sensitiven Schicht 6 und dem zweiten leitfähigen Bereich 2b aufweist. Gemäß dem Ersatzschaltbild von Figur 3 wirken diese Luftspalte als Kondensatoren C1, C2. Entsprechend wirken die leitfähigen Bereiche 1b und 2b mit den Dickoxidbereichen 7 und 8 und dem Substrat als Kondensatoren C3 und C4.

Zur Herstellung werden zunächst die leitfähigen Schichten 1, 2 auf den Dickoxidbereich und die Dünnoxidschicht aufgetragen und durch einen Maskenprozess und anschließendem Ätzen strukturiert. Anschließend werden die Zwischenlagen 13, 15 und 16 deponiert, strukturiert und über den leitfähigen Bereichen 1b und 2b derartig abgeätzt, dass diese freiliegen. Hierdurch wird weiterhin der Freiraum für die später gebildeten.Luftspalte ausgebildet, durch die ein Gasaustausch unter die sensitive Schicht erfolgen kann.

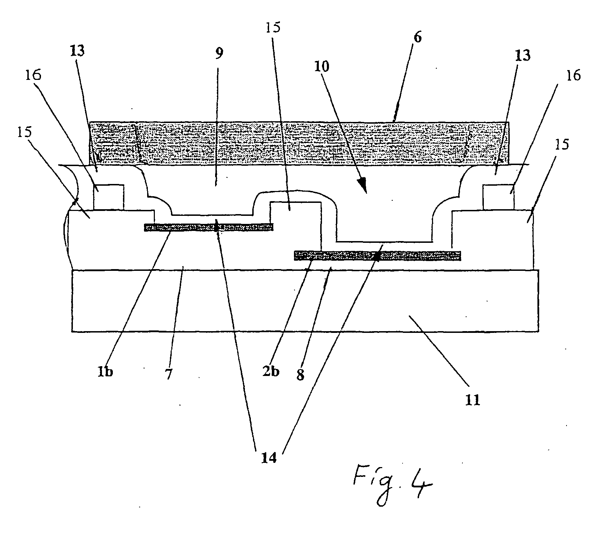

Bei der Ausführungsform der Figur 4 ist gegenüber der Ausbildungsform der Figur 2 eine Isolatorschicht 14 auf die leitfähigen Bereiche 1b und 2b ausgebildet. Sie kann zusammen mit der Lage 13 aufgetragen werden und - anders als in der Ausführungsform der Figur 2 - beim anschließenden Ätzen nicht abgetragen werden.

Diese Ausführungsformen können entsprechend auch mit umgekehrtem Ladungsträgertyp ausgebildet werden.

### Bezugszeichenliste

- 1: erste leitfähige Schicht
- 1a: erstes Gate
- 1b: erster leitfähiger Bereich
- 2: zweite leitfähige Schicht
- 2a: zweites Gate
- 2b: zweiter leitfähiger Bereich
- 3.: erste Drain
- 4.: zweite Drain
- 5.: Source
- 6.: sensitive Gateschicht
- 7.: erste Dickoxidschicht
- 8.: zweite Dickoxidschicht
- 9.: erster Luftspalt
- 10.: zweiter Luftspalt
- 11.: Substrat
- 12.:
- 13.: Zwischenlage
- 14.: Isolator
- 15.: Zwischenlage
- 16.: Zwischenlage
- 17.: erster Abschnitt
- 18.: zweiter Abschnitt
- 20.: erster Teilbereich der sensitiven Schicht 6
- 21.: zweiter Teilbereich der sensitiven Schicht 6
- 22.: Freiraum
- T1: erster Transistor
- T2: zweiter Transistor
- C1: erster Kondensator
- C2: zweiter Kondensator
- C3: dritter Kondensator
- C4: vierter Kondensator

## Patentansprüche

1. Sensor zum Messen einer Ionenkonzentration oder Gaskonzentration, mit
- einer sensitiven Schicht (6), deren Potential abhängig ist von einer umgebenden Gaskonzentration oder Ionenkonzentration,
- wobei die sensitive Schicht (6) einen ersten sensitiven Teilbereich (20) und einen zweiten sensitiven Teilbereich (21) aufweist,
- einem ersten leitfähigen Bereich (1b), der über einen ersten Luftspalt (9) mit dem ersten sensitiven Teilbereich (20) kapazitiv gekoppelt ist,
- einem zweiten leitfähigen Bereich (2b), der über einen im Vergleich zum ersten Luftspalt (9) dickeren, zweiten Luftspalt (10) mit dem zweiten sensitiven Teilbereich (21) kapazitiv gekoppelt ist,
- wobei die Kapazitäten der beiden kapazitiven Kopplungen durch die verschieden dicken Luftspalte (9, 10) bedingt unterschiedlich sind,
einer Vergleichsschaltung mit zwei Feldeffekttransistoren (T1, T2), bei denen ein Gate (1a) eines ersten der beiden Feldeffekttransistoren (T1) mit dem ersten leitfähigen Bereich (1b) und ein Gate (2a) eines zweiten der beiden Feldeffekttransistoren (T2) mit dem zweiten leitfähigen Bereich (2b) verbunden ist, und
- wobei die Feldeffekttransistoren (T1, T2) mit ihren Sourceanschlüssen (5) verbunden sind und ein von einem Potential der sensitiven Schicht (6) abhängiges Ausgangssignal der Vergleichsschaltung an den Feldeffekttransistoren (T1, T2) abnehmbar ist.

2. Sensor nach Anspruch 1, **dadurch gekennzeichnet, dass** der Sensor samt der Vergleichsschaltung mit den beiden Feldeffekttransistoren (T1, T2) auf einem gemeinsamen Substrat (11) angeordnet ist.

3. Sensor nach Anspruch 2, **dadurch gekennzeichnet, dass** die beiden Feldeffekttransistoren (T1, T2) in dem Substrat (11) einen gemeinsamen Sourcebereich (5) aufweisen.

4. Sensor nach Anspruch 2 oder 3 , **dadurch gekennzeichnet, dass** der erste leitfähige Bereich (1b) und das Gate (1a) des ersten Feldeffekttransistors (T1) als eine erste leitfähige Schicht (1) und der zweite leitfähige Bereich (2b) und das Gate (2a) des zweiten Feldeffekttransistors (T2) als eine zweite leitfähige Schicht (2) ausgebildet sind.

5. Sensor nach Anspruch 4, **dadurch gekennzeichnet, dass** die erste leitfähige Schicht (1) und zweite leitfähige Schicht (2) symmetrische vorzugsweise spiegelsymmetrisch zueinander, ausgebildet sind.

6. Sensor nach einem der vorherigen Ansprüche, **dadurch gekennzeichnet, dass** der erste Luftspalt (9) und zweite Luftspalt (10) als Teilbereiche eines unter der sensitiven Schicht (6) ausgebildeten Freiraums (22) ausgebildet sind.

7. Sensor nach einem der vorherigen Ansprüche, **dadurch gekennzeichnet, dass** die sensitive Schicht (6) eine gassensitive Schicht (6) ist und die leitfähigen Bereiche (1b, 2b) zu den Luftspalten (9, 10) hin freiliegen.

8. Sensor nach Anspruch 2 oder 3, **dadurch gekennzeichnet, dass** die sensitive Schicht (6) und die leitfähigen Bereiche (1b,2b) in einem ersten Abschnitt (17) des Substrats (11) und die Vergleichsschaltung mit den Feldeffekttransistoren (T1, T2) in einem zweiten Abschnitt (18) des Substrats (11) ausgebildet sind, wobei der zweite Abschnitt (18) in einer Längsrichtung von dem ersten Abschnitt (17) beabstandet ist.

9. Sensor nach Anspruch 4 oder 5, **dadurch gekennzeichnet, dass** die leitfähigen Schichten (1, 2) Polylagen oder Metallschichten sind.

## Claims

1. Sensor for measuring an ion concentration or gas concentration, comprising
- a sensitive layer (6), the potential of which is dependent on a surrounding gas concentration or ion concentration,
- wherein the sensitive layer (6) comprises a first sensitive sub-region (20) and a second sensitive sub-region (21),
- a first conductive region (1b) which is capacitively coupled to the first sensitive sub-region (20) via a first air gap (9),
- a second conductive region (2b) which is capacitively coupled to the second sensitive sub-region (21) via a second air gap (10) which is thicker than the first air gap (9),
- wherein the capacitances of the two capacitive couplings are different due to the air gaps (9, 10) of different thickness,
- a comparison circuit comprising two field-effect transistors (T1, T2), in which a gate (1a) of a first of the two field-effect transistors (T1) is connected to the first conductive region (1b) and a gate (2a) of a second of the two field-effect transistors (T2) is connected to the second conductive region (2b), and
- wherein the field-effect transistors (T1, T2) are connected by their source terminals (5) and an output signal of the comparison circuit which is dependent on a potential of the sensitive layer (6) can be tapped off at the field-effect transistors (T1, T2).

2. Sensor according to claim 1, **characterised in that** the sensor is arranged on a common substrate (11) together with the comparison circuit comprising the two field-effect transistors (T1, T2).

3. Sensor according to claim 2, **characterised in that** the two field-effect transistors (T1, T2) have a common source region (5) in the substrate (11).

4. Sensor according to claim 2 or 3, **characterised in that** the first conductive region (1b) and the gate (1a) of the first field-effect transistor (T1) are designed as a first conductive layer (1), and the second conductive region (2b) and the gate (2a) of the second field-effect transistor (T2) are designed as a second conductive layer (2).

5. Sensor according to claim 4, **characterised in that** the first conductive layer (1) and the second conductive layer (2) are designed in a symmetrical manner, preferably such that they are mirror-symmetrical to one another.

6. Sensor according to one of the preceding claims, **characterised in that** the first air gap (9) and the second air gap (10) are designed as sub-regions of a clearance (22) formed below the sensitive layer (6).

7. Sensor according to one of the preceding claims, **characterised in that** the sensitive layer (6) is a gassensitive layer (6) and the conductive regions (1b 2b) are exposed towards the air gaps (9, 10).

8. Sensor according to claim 2 or 3, **characterised in that** the sensitive layer (6) and the conductive regions (1b, 2b) are formed in a first section (17) of the substrate (11), and the comparison circuit comprising the field-effect transistors (T1, T2) is formed in a second section (18) of the substrate (11), wherein the second section (18) is arranged at a distance from the first section (17) in a longitudinal direction.

9. Sensor according to claim 4 or 5, **characterised in that** the conductive layers (1, 2) are polylayers or metal layers.

## Revendications

1. capteur pour mesurer une concentration ionique ou une concentration gazeuse comprenant :
- une couche sensible (6) dont le potentiel dépend de la concentration ionique ou de la concentration gazeuse environnantes,
- la couche sensible (6) a une première zone partielle (20) sensible et une seconde zone partielle sensible (21),
- une première zone conductrice (1b) couplée par l'intermédiaire d'un premier intervalle d'air (9) à la première zone partielle sensible (20) par un couplage capacitif,
- une seconde zone conductrice (2b) couplée par un second intervalle d'air (10) à la seconde zone partielle sensible (21) par le couplage capacitif, le second intervalle d'air étant plus épais que le premier intervalle d'air (9),
- les capacités des deux couplages capacitifs étant différentes du fait des intervalles d'air d'épaisseur différente (9, 10),
- un circuit de comparaison ayant deux transistors à effet de champ (T1, T2) dont une porte (1a) du premier des deux transistors à effet de champ (T1) est reliée à la première zone conductrice (1b) et une porte (2a) du second des deux transistors à effet de champ (T2) est reliée à la seconde zone conductrice (2b) et
- les transistors à effet de champ (T1, T2) sont reliés par leur branchement de source (5) et un signal de sortie du circuit de comparaison, dépendant d'un potentiel de la couche sensible (6) est donné par les transistors à effet de champ (T1, T2).

2. Capteur selon la revendication 1,
**caractérisé en ce que**
le capteur avec le circuit de comparaison ainsi que les deux transistors à effet de champ (T1, T2) sont installés sur un substrat (11) commun.

3. Capteur selon la revendication 2,
**caractérisé en ce que**
les deux transistors à effet de champ (T1, T2) ont une zone de source (5) commune dans le substrat (11).

4. Capteur selon la revendication 2 ou 3,
**caractérisé en ce que**
la première zone conductrice (1b) et la porte (1a) du premier transistor à effet de champ (T1) sont réalisées comme première couche conductrice (1), la seconde zone conductrice (2b) et la porte (2a) du second transistor à effet de champ (T2) sont réalisées comme seconde couche conductrice (2).

5. Capteur selon la revendication 4,
**caractérisé en ce que**
la première couche conductrice (1) et la seconde couche conductrice (2) sont réalisées de manière symétrique, de préférence suivant une symétrie plane.

6. Capteur selon l'une des revendications précédentes,
**caractérisé en ce que**
le premier intervalle d'air (9) et le second intervalle d'air (10) sont réalisés comme des zones partielles d'un espace libre (22) sous la couche sensible (6).

7. Capteur selon l'une des revendications précédentes,
**caractérisé en ce que**
la couche sensible (6) est sensible aux gaz et les zones (1b, 2b) conductrices sont dégagées vis-à-vis des intervalles d'air (9, 10).

8. Capteur selon la revendication 2 ou 3,
**caractérisé en ce que**
la couche sensible (6) et les zones conductrices (1b, 2b) sont réalisées dans un premier segment (17) du substrat (11) et le circuit de comparaison avec les transistors à effet de champ (T1, T2) est réalisé dans un second segment (18) du substrat (11), le second segment (18) étant écarté du premier segment (17) dans la direction longitudinale.

9. Capteur selon les revendications 4 ou 5,
**caractérisé en ce que**
les couches conductrices (1, 2) sont des couches multiples ou des couches métalliques.
